# FASCICULE DE BREVET EUROPEEN

(11) **EP 3 004 567 B1**
(45) Date de publication et mention de la délivrance du brevet: **04.01.2017**
(21) Numéro de dépôt: 14804453.0
(22) Date de dépôt: 28.05.2014
(51) Int. Cl.: F01D 21/00

(54) **CARTER DE TURBOMACHINE COMPORTANT UN ORIFICE D'ENDOSCOPIE**
TURBOMASCHINENGEHÄUSE MIT EINEM ENDOSKOPIEPORT
TURBOMACHINE CASING COMPRISING AN ENDOSCOPY PORT

(30) Priorité: 31.05.2013 FR 1354997
(43) Date de publication de la demande: 13.04.2016
(73) Titulaire: Safran Aircraft Engines, 75015 Paris (FR)
(72) Inventeur: LEUTARD, Florence, Irène, Noëlle, F-77550 Moissy-Cramayel cedex (FR); DURAND, Didier, Noël, F-77550 Moissy-Cramayel cedex (FR); JAMON, Thibault, F-77550 Moissy-Cramayel cedex (FR)
(74) Mandataire: Gevers & Orès
(86) Numéro de dépôt international: PCT/FR2014/051284
(87) Numéro de publication internationale: WO 2014/191699

(56) Documents cités:
- EP-A1- 2 407 643
- FR-A1- 2 708 072
- GB-A- 2 236 812
- US-A- 5 867 976

## Description

### DOMAINE TECHNIQUE

La présente invention concerne un carter de turbomachine comportant un orifice d'endoscopie.

### ETAT DE L'ART

L'état de l'art comprend notamment le document EP-A1-2 407 643.

Un orifice d'endoscopie d'un carter de turbomachine est en général formé dans un bossage de ce carter. Dans un cas particulier de réalisation, ce bossage est formé par un organe qui est rapporté et fixé sur le carter, cet organe comportant une cheminée interne qui communique avec l'orifice du carter pour le passage d'un endoscope.

Dans la technique actuelle, l'organe est fixé sur le carter par des moyens du type vis-écrou. L'organe comprend deux orifices de passage de vis dont les têtes prennent appui sur une surface interne du carter et qui reçoivent des écrous destinés à prendre appui sur l'organe pour le serrer contre le carter.

La cheminée de l'organe comprend un filetage interne de vissage d'un bouchon d'obturation, qui est destiné à être retiré par un opérateur préalablement au passage d'un endoscope dans la cheminée et à une opération de contrôle.

Lors de ces opérations de contrôle, on a constaté qu'un opérateur peut dévisser par erreur les écrous des moyens de fixation de l'organe alors que seul le bouchon d'endoscopie devrait être dévissé. Cette erreur peut conduire à la perte des écrous dans le moteur, ce qui nécessite la dépose du moteur.

On a déjà proposé de résoudre ce problème en réalisant deux points de soudure entre chaque écrou et la vis correspondante. Cependant, cette solution ne s'est pas avérée efficace car une tentative de desserrage de l'écrou par un opérateur pourrait entraîner la rupture de la vis et donc nécessiter également la dépose du moteur.

La présente invention a notamment pour but d'apporter une solution simple, efficace et économique au problème précité.

### EXPOSE DE L'INVENTION

L'invention propose un carter de turbomachine, comprenant un orifice d'endoscopie et un organe rapporté et fixé sur le carter et comportant un cheminée qui communique avec l'orifice et qui comporte un filetage interne de vissage d'un bouchon, et des moyens de fixation de l'organe au carter, caractérisé en ce qu'il comprend en outre un bouchon de vissage dans l'orifice du carter et un capot monté sur l'organe et recouvrant au moins partiellement les moyens de fixation, le capot étant agencé pour laisser la cheminée libre d'accès lorsque le bouchon n'est pas vissé dans la cheminée, et en ce que ledit bouchon comprend des moyens d'appui sur le capot pour le maintenir plaqué contre l'organe.

Les moyens de fixation peuvent être de n'importe quel type et par exemple du type vis-écrou, du type rivet, etc., le capot étant destiné à gêner voire empêcher la prise de ces moyens par un outil.

Le capot forme ainsi un cache qui limite l'accès aux moyens de fixation par un outil, tel qu'une clef de vissage/dévissage. Un opérateur ne peut donc pas dévisser par erreur les moyens de fixation lors d'une opération de contrôle par endoscopie. L'invention permet ainsi d'éviter un démontage accidentel des moyens de fixation de l'organe au carter. Par ailleurs, le capot ne gêne pas l'accès à la cheminée et autorise donc le passage d'un endoscope dans la cheminée et l'orifice d'endoscopie du carter.

L'organe peut définir un bossage sur le carter. En position de montage, l'organe peut comprendre une surface externe plane sensiblement parallèle à un axe de révolution du carter lorsque ce dernier est annulaire. Cette surface peut être tangente à une circonférence centrée sur cet axe.

Le capot comprend de préférence un orifice aligné avec la cheminée et configuré pour que le bouchon puisse être vissé dans la cheminée en traversant cet orifice.

Le bouchon assure la retenue du capot sur l'organe. Le capot peut être maintenu en appui sur la surface externe précitée de l'organe.

Le capot peut comprendre un rebord périphérique s'étendant autour de l'organe. Ce rebord peut coopérer par butée avec l'organe pour limiter les déplacements du capot vis-à-vis de l'organe.

Le capot peut comprendre au moins un orifice de passage d'une vis ou d'une tige filetée des moyens de fixation. Il peut comprendre deux orifices de ce type voire plus.

Le capot peut être réalisé en tôle métallique.

Le carter peut comprendre au moins deux orifices d'endoscopie, au moins deux organes rapportés et fixés au niveau de ces orifices et au moins deux capots montés sur ces organes, les capots ayant des formes identiques ou différentes.

Avantageusement, le capot comprend au moins un moyen d'indexage et/ou d'anti-rotation configuré pour coopérer avec un moyen complémentaire d'un bouchon et/ou d'un système d'endoscopie et/ou de ressuage.

La présente invention concerne également une turbomachine, telle qu'un turboréacteur ou un turbopropulseur d'avion, caractérisée en ce qu'il comprend au moins un carter tel que décrit ci-dessus.

L'invention concerne encore un capot pour un carter tel que décrit ci-dessus, caractérisé en ce qu'il comprend un premier orifice configuré pour être traversé par un bouchon d'endoscopie, et au moins un deuxième orifice configuré pour être traversé par une vis ou une tige filetée mais pas par la tête de cette vis ou de par l'écrou destiné à être vissé sur la vis ou la tige filetée. L'invention concerne encore un ensemble comportant un capot de ce type et au moins une vis ou une tige filetée qui traverse ledit au moins un deuxième orifice du capot, cet orifice ayant un diamètre inférieur au diamètre externe de la tête de cette vis ou de l'écrou destiné à être vissé sur la vis ou la tige filetée.

Le capot peut comprendre au moins un moyen d'indexage et/ou d'anti-rotation configuré pour coopérer avec un moyen complémentaire d'un bouchon et/ou d'un système d'endoscopie et/ou de ressuage.

La présente invention concerne également un procédé d'endoscopie et/ou de ressuage à travers un orifice d'endoscopie d'un carter selon l'une des revendications 1 à 9, caractérisé en ce qu'il comprend les étapes consistant à :
a) dévisser le bouchon et le retirer de l'organe fixé sur le carter, et
b) introduire un système d'endoscopie et/ou de ressuage dans la cheminée de l'organe et dans l'orifice du carter,
le capot restant monté sur l'organe pendant les étapes a) et b).

Lorsque le capot comprend un orifice aligné avec la cheminée et configuré pour que le bouchon puisse être vissé dans la cheminée à travers cet orifice, l'étape b) peut consister à introduire le système d'endoscopie et/ou de ressuage dans l'orifice du capot, la cheminée de l'organe, et l'orifice du carter

Lorsque le capot comprend au moins un orifice de passage d'une vis ou d'une tige filetée des moyens de fixation de l'organe, le procédé peut comprendre, avant l'étape b), voire avant l'étape a), une étape supplémentaire consistant à rapporter sur ladite vis ou tige filetée un élément de blocage du capot.

Lorsque le capot comprend au moins un moyen d'indexage et/ou d'anti-rotation et que le système comprend au moins un moyen complémentaire de ce moyen d'indexage, le procédé peut comprendre, pendant l'étape b), une sous-étape consistant à faire coopérer le moyen d'indexage du capot et le moyen complémentaire du système pour notamment déterminer une position de référence du système vis-à-vis du carter.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un carter de turbomachine équipé d'organes et de bouchons d'endoscopie ;
- la figure 2 est une vue schématique en perspective du carter de la figure 1 sans les bouchons d'endoscopie et les organes de montage de ces bouchons ;
- la figure 3 est une vue schématique en perspective et en coupe axiale selon l'axe longitudinal du carter, des organes et des bouchons d'endoscopie de la figure 1 ;
- les figures 4 et 5 sont des vues schématiques en perspective d'un carter de turbomachine équipé de capots selon l'invention ;
- la figure 6 est une vue schématique en perspective et en coupe axiale selon l'axe longitudinal du carter, des organes, des bouchons et des capots de la figure 5 ;
- les figures 7 et 8 sont des vues schématiques en perspective d'un capot selon l'invention, vu respectivement de dessus et de dessous ;
- la figure 9 est une vue schématique en perspective d'une variante de réalisation du capot selon l'invention, vu de côté ; et
- la figure 10 est une vue schématique en coupe axiale d'un orifice d'endoscopie d'un carter et illustre un procédé d'endoscopie et/ou de ressuage selon l'invention.

### DESCRIPTION DETAILLEE

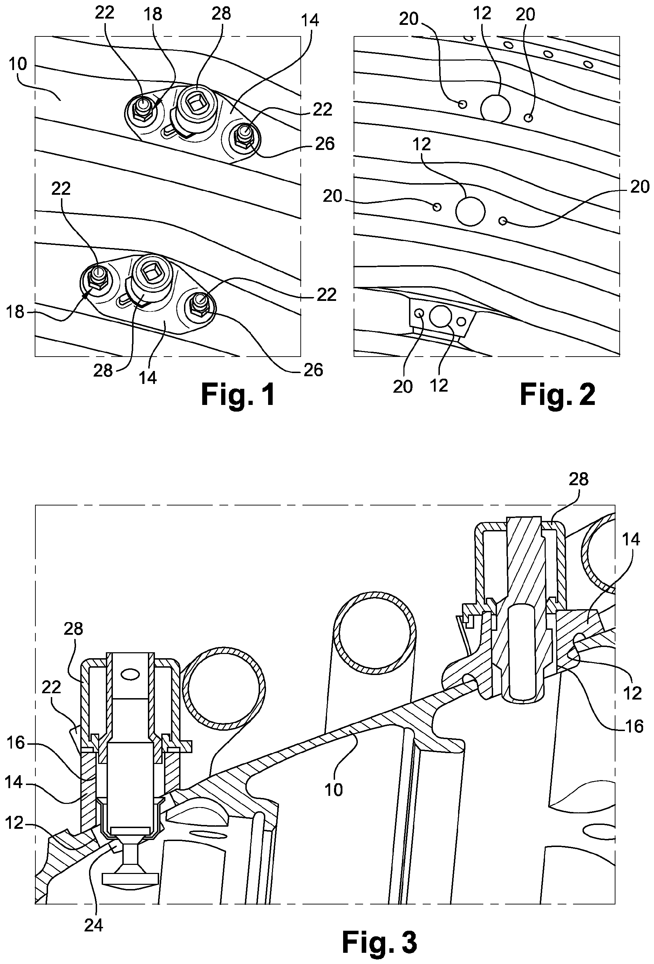

On se réfère d'abord aux figures 1 à 3 qui représentent la technique antérieure à l'invention. Une turbomachine, telle qu'un turboréacteur ou un turbopropulseur d'avion, comprend des carters comportant des orifices d'endoscopie, c'est-à-dire des orifices de passage d'un endoscope pour l'inspection de pièces à l'intérieur du carter lors d'une opération de contrôle, qui peut être réalisée sur un moteur accroché à l'aile de l'avion.

Dans les dessins, le carter 10 comprend trois orifices d'endoscopie 12 qui sont espacés les uns des autres le long d'un axe longitudinal du carter, qui a en général une forme annulaire. Ces orifices 12 sont formés dans une partie relativement mince du carter 10.

Un organe 14 est rapporté et fixé sur le carter, au niveau de chaque orifice 12, pour définir un bossage en saillie sur la surface externe du carter. Cet organe 14 comprend une cheminée centrale 16 destinée à communiquer avec l'orifice 12 correspondant et des orifices latéraux 18 qui sont alignés avec des orifices 20 du carter et qui servent au passage de moyens du type vis-écrou de fixation de l'organe 14 sur le carter 10.

Chaque moyen de fixation comprend une vis 22 qui est engagée dans un orifice 20 du carter et dans l'orifice 18 correspondant de l'organe 14, et dont la tête 24 prend appui sur la surface interne du carter. Chaque vis reçoit un écrou 26 qui est vissé depuis l'extérieur et qui est destiné à prendre appui sur l'organe 14.

La cheminée 16 comprend un filetage interne de vissage d'un bouchon 28 d'obturation de la cheminée.

La présente invention propose de remédier au problème exposé ci-dessus grâce à un capot destiné à être monté sur chaque organe et à recouvrir au moins partiellement l'écrou 26 pour limiter voire empêcher son accès par un outil.

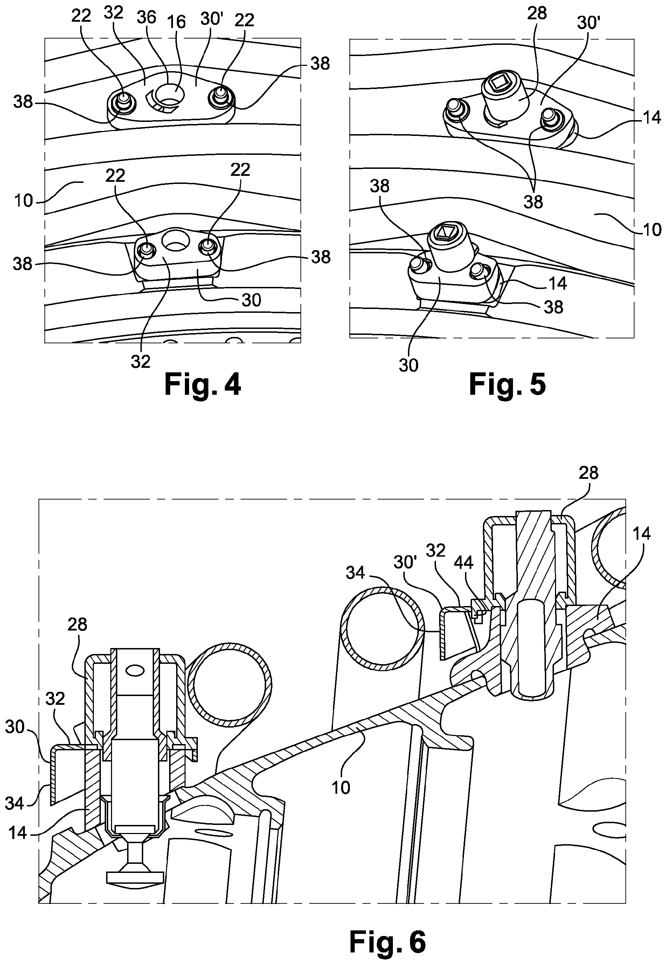

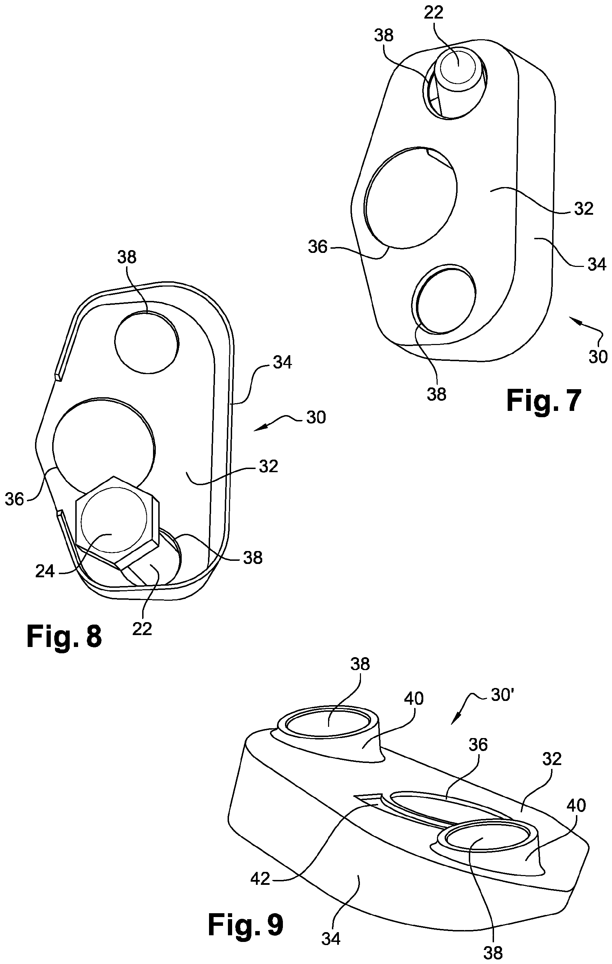

Les figures 4 à 9 représentent un exemple de réalisation de l'invention dans lequel deux formes particulières du capot sont représentées. En effet, un carter 10 peut comprendre un nombre de capots 30, 30' égal au nombre d'organes 14 de ce carter. Dans l'exemple des figures 1 à 3, le carter peut donc être équipé de trois capots (dont seulement deux sont représentés aux figures 4 à 6). Par ailleurs, du fait que les formes et dimensions des organes 14 peuvent différer d'un organe à l'autre en fonction notamment de la position de ces organes sur le carter, les capots selon l'invention qui équipent un même carter peuvent être différents ou identiques. Dans l'exemple représenté, le carter 10 est équipé de deux types des capots 30, 30', le premier type 30 étant représenté aux figures 7 et 8 et le second type 30' étant représenté en figure 9.

Chaque capot 30, 30' comprend une paroi 32 relativement plane destinée à recouvrir l'organe 14 et un rebord périphérique 34 s'étendant du côté du carter 10 et destiné à s'étendre sur sensiblement tout le pourtour de l'organe, par exemple à distance de celui-ci.

La paroi 32 de chaque capot 30, 30' comprend un orifice central 36 alignée avec la cheminée 16 de l'organe et ayant un diamètre interne sensiblement égal ou légèrement supérieur à celui de la cheminée. La paroi 32 comprend en outre deux orifices latéraux 38 de passage des tiges filetées des vis 22.

Comme cela est visible aux figures 7 et 8, chaque orifice 38 a un diamètre supérieur au diamètre externe de la tige filetée de la vis 22 et inférieur à celui de l'écrou 26, de façon à ce que cet écrou ne soit pas accessible par cet orifice et ne puisse pas être dévissé à travers cet orifice.

En position de montage représentée en figure 4, chaque capot 30, 30' prend appui sur un rebord périphérique externe de la cheminée 16 de l'organe correspondant et sa paroi 32 s'étend dans un plan s'étendant au dessus des écrous 26 vissés sur les vis 22. Ces écrous ne sont donc pas visibles à la figure 4.

Le bouchon 28 est vissé dans la cheminée 16 de l'organe 14 de la même manière que dans la technique antérieure. Le bouchon 28 est ici destiné à être vissé dans la cheminée 16 à travers l'orifice 36 du capot 30, 30' et à prendre appui sur le bord périphérique de cet orifice pour maintenir le capot en appui sur le rebord précité de la cheminée. Le capot 30, 30' est ainsi serré entre le bouchon 28 et l'organe 14 au serrage du bouchon, ce qui est suffisant pour assurer sa retenue sur le carter. Comme cela est visible en figure 6, le bouchon 28 peut comprendre un assemblage de plusieurs pièces.

Comme cela est visible en figure 9, chaque orifice 38 du capot 30' est défini par une cheminée 40 de passage de la tige filetée d'une vis 22. Les cheminées 40 du capot 30' peuvent servir de guidage au montage du capot et éviter un mauvais positionnement du capot.

La paroi 32 du capot 30' de la figure 9 comprend en outre une fenêtre incurvée 42 s'étendant autour et au voisinage de l'orifice 36. Cette fenêtre est destinée à recevoir un ergot 44 du bouchon 28 (figure 6).

La fenêtre 42 peut être considérée comme ayant une double fonction. En premier lieu, elle reçoit l'ergot 44 du bouchon 28, qui peut alors coopérer avec une forme aménagée dans le bossage du carter pour bloquer le bouchon en rotation. Elle peut également avoir une fonction d'indexage. En effet, en fonction de la position de la fenêtre 42 autour de l'orifice 36, elle peut permettre de positionner le bouchon 28 dans une position déterminée, par exemple de serrage optimal.

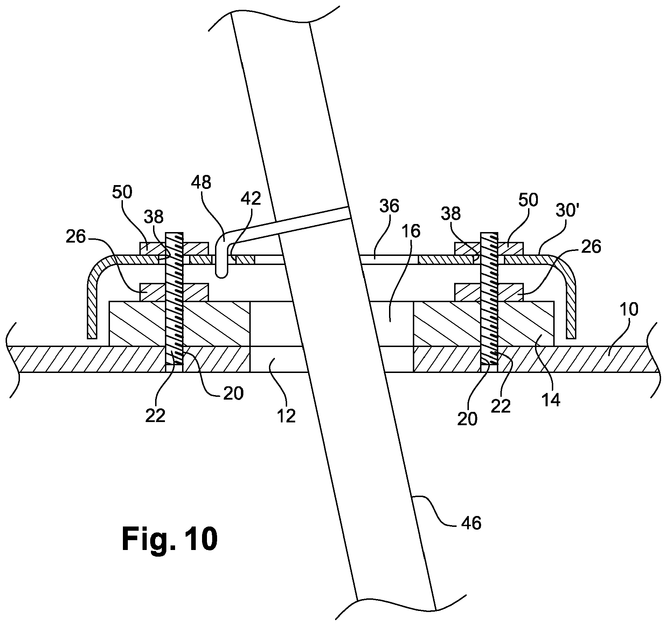

Avantageusement, comme cela est schématiquement représenté en figure 10, la fenêtre 42 peut en outre servir de moyen d'indexage à un système 46 d'endoscopie et/ou de ressuage qui est engagé dans l'orifice 12 du carter 10 (à travers l'orifice 36 du capot 14 et la cheminée 16 de l'organe 14). Le système 46 porte alors un moyen 48 complémentaire configuré pour coopérer avec le moyen d'indexage 42 du capot 30'. Comme dans l'exemple représenté, il peut s'agir d'un doigt porté par le système 46 et destiné à être engagé dans la fenêtre 42 du capot 30'. Ceci est particulièrement avantageux car cela permet de définir une position de référence du système 46 vis-à-vis du carter 10 et donc de faciliter notamment la localisation de la zone observée dans le moteur lors d'une opération de maintenance. C'est notamment le cas lorsque la fenêtre 42 a une position prédéterminée sur le capot 30', il est alors facile de déduire précisément la position du système 46 engagé dans l'orifice d'endoscopie 12.

Avant d'engager le système 46 dans l'orifice 36 du capot 14, la cheminée 16 de l'organe 14, et l'orifice 12 du carter 10, il est nécessaire de retirer le bouchon vissé dans la cheminée. C'est ce bouchon qui assure la retenue et l'immobilisation du capot 30' sur le carter 10, comme décrit dans ce qui précède. Après le retrait du bouchon, le capot 30' est donc monté flottant sur le carter, du fait notamment des jeux entre les orifices 38 du capot et les tiges filetées 22 les traversants. Pour éviter toutefois des déplacements du capot 30' lors d'une inspection, l'invention propose en outre de l'immobiliser au moyen d'éléments de blocage 50 qui sont ici rapportés sur les extrémités libres des tiges filetées 22 et qui sont ici destinés à prendre appui sur le capot 30' pour le maintenir contre l'organe 14 par exemple. Ces éléments de blocage 50 sont par exemple des écrous ou rondelles en matériau souple tel qu'en caoutchouc.

## Revendications

1. Carter (10) de turbomachine, comprenant un orifice d'endoscopie (12) et un organe (14) rapporté et fixé sur le carter et comportant une cheminée (16) qui communique avec l'orifice, et qui comporte un filetage interne de vissage d'un bouchon (28), et des moyens (22, 26) de fixation de l'organe au carter, **caractérisé en ce qu'**il comprend en outre un bouchon (28) de vissage dans l'orifice du carter et un capot (30) monté sur l'organe et recouvrant au moins partiellement les moyens de fixation, le capot étant agencé pour laisser la cheminée libre d'accès lorsque le bouchon n'est pas vissé dans la cheminée, et **en ce que** ledit bouchon (28) comprend des moyens d'appui sur le capot (30) pour le maintenir plaqué contre l'organe (14).

2. Carter selon la revendication 1, **caractérisé en ce que** les moyens de fixation (22, 26) sont du type vis-écrou, le capot (30) étant destiné à gêner voire empêcher la prise de ces moyens par un outil.

3. Carter selon la revendication 1 ou 2, **caractérisé en ce que** le capot (30) comprend un orifice (36) aligné avec la cheminée (16) et configuré pour que le bouchon (28) puisse être vissé dans la cheminée à travers cet orifice.

4. Carter selon l'une des revendications précédentes, **caractérisé en ce que** le capot (30) comprend un rebord périphérique (34) s'étendant autour de l'organe (14).

5. Carter selon l'une des revendications précédentes, **caractérisé en ce que** le capot (30) comprend au moins un orifice (38) de passage d'une vis (22) ou d'une tige filetée des moyens de fixation.

6. Carter selon l'une des revendications précédentes, **caractérisé en ce que** le capot (30) est réalisé en tôle métallique.

7. Carter selon l'une des revendications précédentes, **caractérisé en ce qu'**il comprend au moins deux orifices d'endoscopie (12), au moins deux organes (14) rapportés et fixés au niveau de ces orifices et au moins deux capots (30) montés sur ces organes, les capots ayant des formes identiques ou différentes.

8. Carter selon l'une des revendications précédentes, **caractérisé en ce que** le capot (30') comprend au moins un moyen d'indexage et/ou d'anti-rotation (42) configuré pour coopérer avec un moyen (44, 48) complémentaire d'un bouchon (28) et/ou d'un système (46) d'endoscopie et/ou de ressuage.

9. Turbomachine, telle qu'un turboréacteur ou un turbopropulseur d'avion, **caractérisée en ce qu'**il comprend au moins un carter (10) selon l'une des revendications précédentes.

10. Capot (30) pour un carter selon l'une des revendications 1 à 8, **caractérisé en ce qu'**il comprend un premier orifice (36) configuré pour être traversé par un bouchon d'endoscopie (28), et au moins un deuxième orifice (38) configuré pour être traversé par une vis (22) ou une tige filetée mais pas par la tête (24) de cette vis ou par l'écrou (26) destiné à être vissé sur la vis ou la tige filetée.

11. Capot selon la revendication 10, **caractérisé en ce qu'**il comprend au moins un moyen d'indexage et/ou d'anti-rotation (42) configuré pour coopérer avec un moyen (44, 48) complémentaire d'un bouchon (28) et/ou d'un système (46) d'endoscopie et/ou de ressuage.

12. Procédé d'endoscopie et/ou de ressuage à travers un orifice d'endoscopie (12) d'un carter (10) selon l'une des revendications 1 à 8, **caractérisé en ce qu'**il comprend les étapes consistant à :
a) dévisser le bouchon (28) et le retirer de l'organe (14) fixé sur le carter, et
b) introduire un système (46) d'endoscopie et/ou de ressuage dans la cheminée (16) de l'organe et dans l'orifice du carter,
le capot restant monté sur l'organe pendant les étapes a) et b).

13. Procédé selon la revendication 12, **caractérisé en ce que**, le capot (30) comprenant au moins un orifice (38) de passage d'une vis (22) ou d'une tige filetée des moyens de fixation de l'organe (14), il comprend, avant l'étape b), voire avant l'étape a), une étape supplémentaire consistant à rapporter sur ladite vis ou tige filetée un élément (50) de blocage du capot.

14. Procédé selon la revendication 12 ou 13, **caractérisé en ce que**, le capot (30) comprenant au moins un moyen d'indexage et/ou d'anti-rotation (42) et ledit système (46) comprenant au moins un moyen (48) complémentaire de ce moyen d'indexage, il comprend, pendant l'étape b), une sous-étape consistant à faire coopérer le moyen d'indexage du capot et le moyen complémentaire du système pour notamment déterminer une position de référence du système vis-à-vis du carter.

## Patentansprüche

1. Gehäuse (10) einer Strömungsmaschine, umfassend eine Endoskopieöffnung (12) und ein auf dem Gehäuse positioniertes und befestigtes Bauteil (14), umfassend einen Kanal (16), der mit der Öffnung verbunden ist, und das ein Innengewinde zum Verschrauben eines Verschlusses (28) umfasst, und Mittel (22, 26) zum Befestigen des Bauteils am Gehäuse, **dadurch gekennzeichnet, dass** es ferner einen Verschluss (28) zum Verschrauben in der Öffnung des Gehäuses und eine auf dem Bauteil montierte und wenigstens teilweise die Befestigungsmittel abdeckende Abdeckung (30) umfasst, wobei die Abdeckung ausgebildet, den Kanal frei zugänglich zu lassen, wenn der Verschluss nicht in den Kanal geschraubt ist, und dass der Verschluss (28) Mittel zum Abstützen auf der Abdeckung (30) umfasst, um diesen gegen das Bauteil (14) verstrebt zu halten.

2. Gehäuse nach Anspruch 1, **dadurch gekennzeichnet, dass** die Befestigungsmittel (22, 26) in Form einer Schraube/Mutter ausgeführt sind, wobei die Abdeckung (30) dazu bestimmt ist, das Fassen dieser Mittel durch ein Werkzeug zu behindern bzw. zu verhindern.

3. Gehäuse nach Anspruch 1 oder 2, **dadurch gekennzeichnet, dass** die Abdeckung (30) eine mit dem Kanal (16) ausgerichtete Öffnung (36) umfasst, die so ausgebildet ist, dass der Verschluss (28) über diese Öffnung in den Kanal geschraubt werden kann.

4. Gehäuse nach einem der vorhergehenden Ansprüche, **dadurch gekennzeichnet, dass** die Abdeckung (30) einen sich um das Bauteil (14) erstreckenden Umfangsrand (34) umfasst.

5. Gehäuse nach einem der vorhergehenden Ansprüche, **dadurch gekennzeichnet, dass** die Abdeckung (30) wenigstens eine Öffnung (38) zum Durchführen einer Schraube (22) oder einer Gewindestange der Befestigungsmittel umfasst.

6. Gehäuse nach einem der vorhergehenden Ansprüche, **dadurch gekennzeichnet, dass** die Abdeckung (30) aus Metallblech gefertigt ist.

7. Gehäuse nach einem der vorhergehenden Ansprüche, **dadurch gekennzeichnet, dass** es wenigstens Endoskopieöffnungen (12), wenigstens zwei auf Höhe dieser Öffnung positionierte und befestigte Bauteile (14) und wenigstens zwei auf diesen Bauteilen montierte Abdeckungen (30) umfasst, wobei die Abdeckungen identische oder verschiedene Formen aufweisen.

8. Gehäuse nach einem der vorhergehenden Ansprüche, **dadurch gekennzeichnet, dass** die Abdeckung (30') wenigstens ein Positionier- und/oder Verdrehsicherungsmittel (42) umfasst, das zum Zusammenwirken mit einem Mittel (44, 48) zusätzlich zu einem Verschluss (28) und/oder einem Endoskopie- und/oder Eindringprüfsystem (46) ausgebildet ist.

9. Strömungsmaschine wie ein Flugzeug-Turbostrahltriebwerk oder -Turbopropellertriebwerk, **dadurch gekennzeichnet, dass** sie wenigstens ein Gehäuse (10) nach einem der vorhergehenden Ansprüche umfasst.

10. Abdeckung (30) für ein Gehäuse nach einem der Ansprüche 1 bis 8, **dadurch gekennzeichnet, dass** sie eine erste Öffnung (36), die ausgebildet ist, von einem Endoskopieverschluss (28) passiert zu werden, und eine zweite Öffnung (38), die ausgebildet ist, von einer Schraube (22) oder einer Gewindestange, aber nicht vom Kopf (24) dieser Schraube oder von der Mutter (26), die vorgesehen ist, auf die Schraube oder die Gewindestange geschraubt zu werden, passiert zu werden, umfasst.

11. Abdeckung nach Anspruch 10, **dadurch gekennzeichnet, dass** sie wenigstens ein Positionier- und/oder Verdrehsicherungsmittel (42) umfasst, das zum Zusammenwirken mit einem Mittel (44, 48) zusätzlich zu einem Verschluss (28) und/oder einem Endoskopie- und/oder Eindringprüfsystem (46) ausgebildet ist.

12. Endoskopie- und/oder Eindringprüfverfahren über eine Endoskopieöffnung (12) eines Gehäuses (10) nach einem der Ansprüche 1 bis 8, **dadurch gekennzeichnet, dass** es die folgenden Schritte umfasst:
a) Abschrauben des Verschlusses (28) und Entfernen vom auf dem Gehäuse befestigten Bauteil (14), und
b) Einführen eines Endoskopie- und/oder Eindringprüfsystems (46) in den Kanal (16) des Bauteils und in die Öffnung des Gehäuses,
wobei die Abdeckung während Schritt a) und b) auf dem Bauteil montiert bleibt.

13. Verfahren nach Anspruch 12, **dadurch gekennzeichnet, dass** es vor dem Schritt b) bzw. vor dem Schritt a) einen zusätzlichen Schritt umfasst, der darin besteht, auf der Schraube oder Gewindestange ein Element (50) zum Blockieren der Abdeckung anzubringen, wobei die Abdeckung (30) wenigstens eine Öffnung (38) zum Durchführen einer Schraube (22) oder einer Gewindestange der Befestigungsmittel des Bauteils (14) umfasst.

14. Verfahren nach Anspruch 12 oder 13, **dadurch gekennzeichnet, dass** es während des Schritts b) einen Teilschritt umfasst, der darin besteht, das Positioniermittel der Abdeckung und das zusätzliche Mittel des Systems zusammenwirken zu lassen, um insbesondere eine Referenzstellung des Systems in Bezug auf das Gehäuse zu bestimmen, wobei die Abdeckung (30) wenigstens ein Positionier- und/oder Verdrehsicherungsmittel (42) umfasst und das System (46) wenigstens ein zusätzliches Mittel (48) dieses Positioniermittels umfasst.

## Claims

1. Turbine engine casing (10) comprising an endoscopy opening (12) and a member (14) which is positioned on and fixed to the casing and comprising a chute (16) which communicates with the opening, and which comprises an internal thread for screwing a plug (28), and means (22, 26) for fixing the member to the casing, **characterized in that** it further comprises a plug (28) for screwing into the casing opening and a cowl (30) which is mounted on the member and covers the fixing means at least in part, the cowl being arranged so as to allow free access to the chute when the plug is not screwed into said chute, said plug (28) comprising means for bearing against the cowl (30) so as to keep it pressed against the member (14).

2. Casing according to claim 1, wherein the fixing means (22, 26) are of the screw and nut type, the cowl (30) being intended to impede or even prevent said means from being taken using a tool.

3. Casing according to claim 1, wherein the cowl (30) comprises an opening (36) which is aligned with the chute (16) and is designed in such a manner than the plug (28) can be screwed into the chute through said opening.

4. Casing according to claim 1, wherein the cowl (30) comprises a peripheral rim (34) extending around the member (14).

5. Casing according to claim 1, wherein the cowl (30) comprises at least one opening (38) for mounting a screw (22) or a threaded rod of the fixing means.

6. Casing according to claim 1, wherein the cowl (30) is made of metal sheeting.

7. Casing according to claim 1, which it comprises at least two endoscopy openings (12), at least two members (14) which are positioned and fixed in the region of said openings, and at least two cowls (30) which are mounted on said members, the cowls having shapes which are the same or different.

8. Casing according to claim 1, wherein the cowl (30') comprises at least one indexing and/or anti-rotation means (42) which is designed to cooperate with a complementary means (44, 48) of a plug (28) and/or of an endoscopy and/or liquid penetrant testing system (46).

9. Turbine engine of an aeroplane, which comprises at least one casing (10) according to claim 1.

10. Cowl (30) for a casing according to claim 1, which comprises a first opening (36) which is designed to be passed through by an endoscopy plug (28), and at least one second opening (38) which is designed to be passed through by a screw (22) or a threaded rod but not by the head (24) of said screw or by the nut (26) which is intended to be screwed onto the screw or the threaded rod.

11. Cowl according to claim 10, which comprises at least one indexing and/or anti-rotation means (42) which is designed to cooperate with a complementary means (44, 48) of a plug (28) and/or of an endoscopy and/or liquid penetrant testing system (46).

12. Method for carrying out an endoscopy and/or liquid penetrant testing through an endoscopy opening (12) in a casing (10) according to claim 1, which comprises steps consisting in:
a) unscrewing the plug (28) and removing it from the member (14)which is fixed to the casing, and
b) introducing an endoscopy and/or liquid penetrant testing system (46) into the chute (16)
of the member and into the opening in the casing,
the cowl remaining mounted on the member during steps a) and b).

13. Method according to claim 12, **characterised in that**, the cowl (30) comprising at least one opening (38) for mounting a screw (22) or a threaded rod of the means for fixing the member (14), said method comprises, before step b), and even before step a), an additional step consisting in positioning on said screw or threaded rod an element (50) for locking the cowl.

14. Method according to either claim 12, wherein, the cowl (30) comprising at least one indexing and/or anti-rotation means (42) and said system (46) comprising at least one means which is complementary to said indexing means (48), said method comprises, during step b), a sub-step consisting in making the indexing means of the cowl and the means which is complementary to the system cooperate in order to determine a reference position of the system with respect to the casing.
